# FASCICULE DE BREVET EUROPEEN

(11) **EP 0 318 346 B1**
(45) Date de publication et mention de la délivrance du brevet: **27.01.1993**
(21) Numéro de dépôt: 88402762.4
(22) Date de dépôt: 03.11.1988
(51) Int. Cl.: A47C 31/02

(54) **Dispositif de fixation d'un revêtement notamment un revêtement de siège**
Befestigungsmittel für einen Sitzüberzug
Securing device for seat upholstery

(30) Priorité: 24.11.1987 FR 8716287
(43) Date de publication de la demande: 31.05.1989
(73) Titulaire: CESA COMPAGNIE EUROPEENNE DE SIEGES POUR AUTOMOBILES, 92300 Levallois-Perret (FR)
(72) Inventeur: Deley, Serge, F-25230 Seloncourt (FR); Fourrey, François, F-25200 Montbeliard (FR)
(74) Mandataire: Moncheny, Michel

(56) Documents cités:
- FR-A- 2 528 681
- GB-A- 1 376 658
- US-A- 2 322 836

## Description

L'invention concerne un dispositif de fixation d'un revêtement soit sur des sièges et notamment des sièges pour véhicule automobile, soit sur une cloison ou paroi ou autre.

La fixation d'un revêtement nécessite généralement un certain nombre d'opérations de préparation du revêtement, par exemple l'anglésage, qui doivent être effectuées avec précision, en outre les éléments de fixation doivent être réalisés et placés avec précision ce qui entraîne une augmentation des coûts de fabrication.

La présente invention a pour but de résoudre le problème de la fixation d'un revêtement en réalisant un dispositif permettant de le fixer facilement et rapidement sur un support quelconque, sans précision particulière.

L'invention a pour objet un dispositif de fixation de revêtement qui comporte d'une part un profilé muni de fentes longitudinales et, d'autre part, un fil d'anglésage replié en au moins deux points pour former des agrafes de fixation destinées à coopérer avec les fentes, chaque agrafe étant située de manière générale dans un plan incliné par rapport à l'axe du fil d'anglésage et étant susceptible de se déformer par vrillage lors de son insertion dans une fente du profilé mais reprenant élastiquement, après cette insertion, sa forme initiale et une position inclinée par rapport à la fente.

Selon d'autres caractéristiques :
- les agrafes de fixation ont sensiblement la forme d'un triangle de sommet arrondi dont la base est située dans ledit plan incliné et dont le sommet est situé dans un plan parallèle a l'axe du fil d'anglésage;
- les fentes du profilé s'étendent parallèlement à la direction des éléments d'anglésage ;
- la base de chaque agrafe de fixation, après insertion, est en appui sur la face intérieure du profilé de chaque côté de la fente de réception.

Dans le présent mémoire on a décrit l'invention en liaison avec une application particulière de revêtement de siège, mais il est bien entendu que cette description n'est donnée qu'a titre d'exemple et ne limite en rien le champ d'application de l'invention. La description sera faite en se référant aux dessins annexés, donnés uniquement a titre d'exemple, dans lesquels :
- la Fig. 1 est une vue en coupe transversale d'un élément de siège garni ;
- la Fig. 2 représente les différents stades de montage des moyens de fixation selon l'invention ;
- la Fig. 3 est une vue suivant F de la Fig. 2;
- les Figs.4A et 4B représentent des variantes du siège.

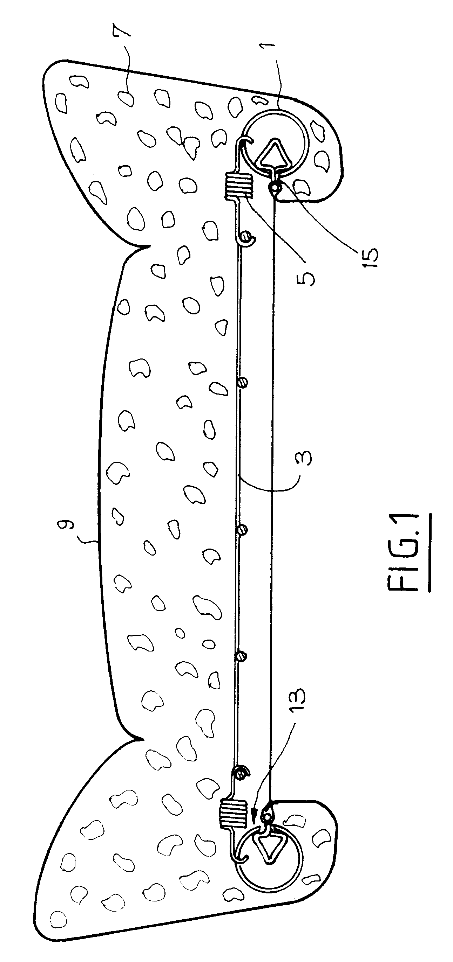

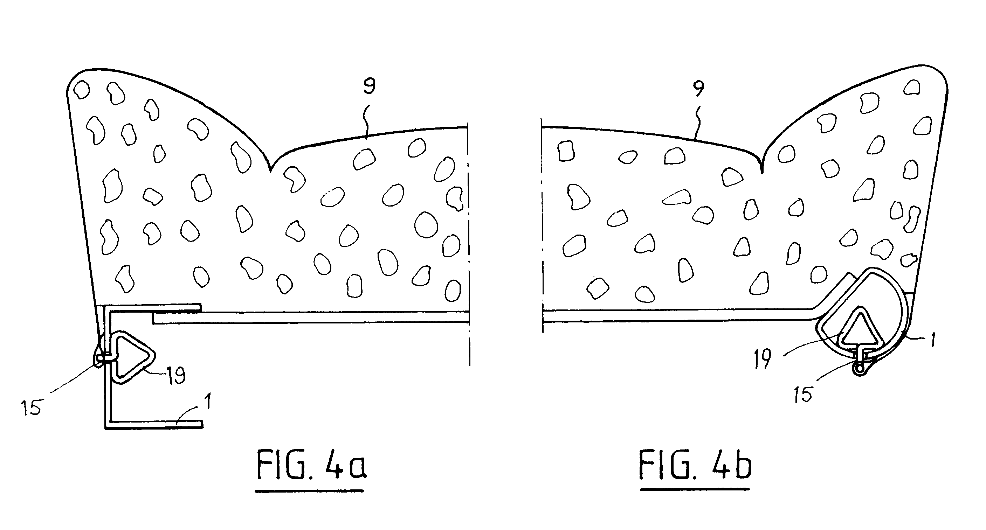

On a représenté aux Fig. 1 et 4, un élément de siège, assise ou dossier, constitué d'une armature creuse ou profilé 1 sur laquelle est fixée une nappe 3 soit par l'intermédiaire de ressorts 5 (Fig. 1), soit directement (Fig.4). Un garnissage 7, de préférence en mousse élastique, est soit posé sur la nappe en entourant l'armature, soit posé sur la nappe et l'armature sans recouvrir cette dernière.

Un revêtement 9, en tissu ou tout autre matériau de présentation, vient recouvrir le garnissage et dans le cas des modes de réalisation représentés figures 4A et 4B en partie l'armature 1.

Le dispositif de fixation du revêtement est constitué d'une part par le profilé 1 dans lequel sont pratiquées des fentes longitudinales 15, coaxiales mais espacées, et, d'autre part, par un fil d'anglésage, de référence générale 13 dont l'axe est parallèle à celui des fentes 15. Le fil comporte plusieurs parties généralement, mais non obligatoirement, rectilignes 17,17a servant à angléser le revêtement 9 et en au moins deux points il est replié de manière à former des agrafes 19, 19a permettant la fixation du revêtement 9 sur l'armature 1. Les parties rectilignes 17, 17a sont situées de part et d'autre d'une agrafe 19.

Les agrafes de fixation 19, 19a font saillie par rapport aux parties rectilignes 17, 17a et sont de manière générale situées dans un plan incliné par rapport a l'axe du fil d'anglésage.

Les agrafes ont sensiblement la forme d'un triangle dont le sommet arrondi 21 est situé dans un plan parallèle à l'axe du fil d'anglésage de manière à faciliter l'engagement de l'agrafe dans les fentes 15 de l'armature 1. Les côtés 23, 25 du triangle formant l'agrafe s'éloignent en sens inverse de ce plan et sont ensuite repliés l'un vers l'autre en deux ailes 27, 29 pour ainsi former la base du triangle et constituer une base de retenue de l'agrafe. Les ailes 27, 29 font un angle α par rapport a l'axe du fil et viennent, après insertion, s'appuyer de chaque côté de la fente 15, assurant ainsi la fixation du système sur l'armature 1. La longueur totale des ailes étant supérieure à la largeur de la fente 15 mais inférieure à la longueur de la fente, il en résulte une facilité de montage due au fait qu'il n'est pas nécessaire que les entraxes respectifs des fentes 15 et des agrafes 19, 19a etc... soient très précis.

L'opération de garnissage se déroule de la manière suivante. Tout d'abord on prépare le revêtement 9 en y pratiquant des ouvertures 31 de faibles dimensions par rapport à la longueur des ailes 27,29, dans lesquelles on introduit les agrafes 19 en les reserrant latéralement puis on laisse les agrafes reprendre élastiquement leur forme initiale. Ensuite on retourne le revêtement autour des parties rectilignes 17, 17a etc... et on fixe le revêtement par rapport à ces dernières en effectuant une couture longitudinale le long de ce dernier, ce qui immobilise le dispositif de fixation sur le revêtement. Pour que le revêtement ait pratiquement ses dimensions définitives, il faut qu'au moins deux de ses extrémités soient munies du fil d'anglésage.

On à par ailleurs assemblé la nappe 3 sur l'armature 1 et recouvert cette nappe et l'armature du garnissage 7. On pose ensuite sur cet ensemble le revêtement 9 préparé, ce qui est une opération particulièrement facile puisque le revêtement n'est fixé en aucun point, en s'assurant que les agrafes 19, 19a sont à peu près en face des fentes 15. On effectue les coutures nécessaires de mise en forme du garnissage puis on insère les agrafes 19,19a dans les fentes 15 de l'armature 1 de manière a fixer et à tendre le revêtement.

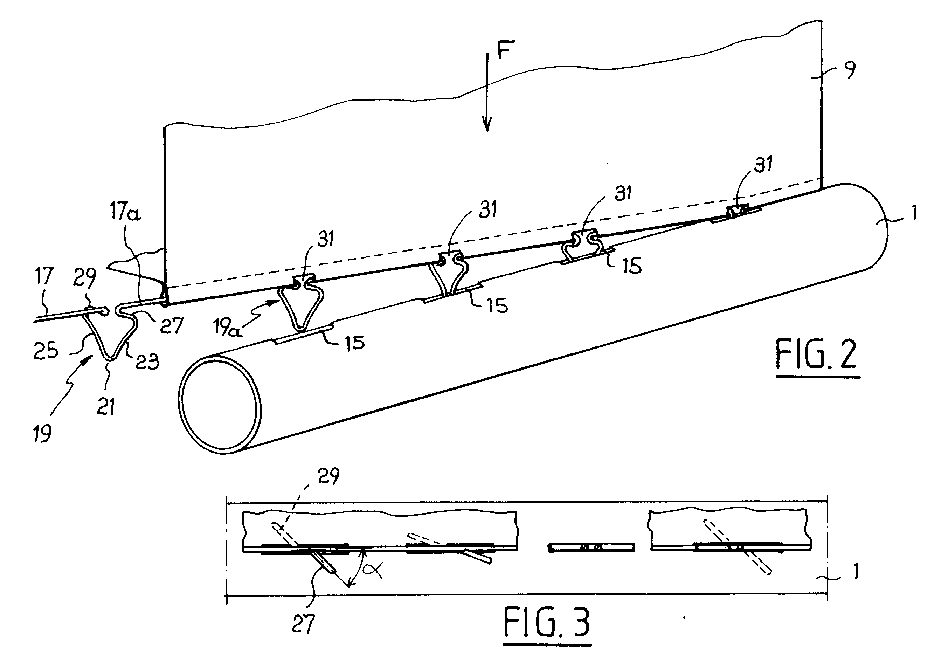

L'opération d'insertion des agrafes 19, 19a etc... se décompose de la manière suivante (Figs.2 et 3). On engage tout d'abord l'extrémité 21 de chacune des agrafes 19 dans la fente 15 correspondante. Au fur et à mesure de la pénétration de l'agrafe dans la fente, les côtés 25, 23 et les ailes 27,29 se déforment élastiquement selon un mouvement de vrillage, jusqu'au moment où les ailes sont parallèles à la fente 15 et peuvent la traverser. Lorsque les ailes sortent de la fente 15 du côté opposé au montage, l'agrafe reprend sa forme d'origine et sa position initiale inclinée et ses ailes se placent de chaque côté de la fente du côté intérieur de l'armature. Les ailes 27 et 29 sont alors en appui sur la face interne de l'armature avec leur angle d'inclinaison initial α , interdisant par la le retour en arrière hors de la fente de l'agrafe et assurant ainsi la fixation du revêtement 9.

On remarquera qu'il n'est pas nécessaire que les éléments d'armature aient une section cylindriques, tout élément d'armature dont la forme de section droite permet d'y pratiquer des fentes peut convenir comme par exemple un profilé en U (Fig.4A), ou une section en étrier fermé (Fig.4B).

De même le garnissage et le revêtement peuvent entourer presque complètement l'élément d'armature, dans ce cas les fentes 15 sont situées sur la partie de l'armature orientée vers l'intérieur.

On notera que le dispositif de fixation de la présente invention offre de nombreux avantages mise en place facile du fil d'anglésage sur le revêtement, fabrication peu coûteuse puisqu' il n'est pas nécessaire d'avoir une grande précision pour la réalisation des différents éléments et pose très facile qui peut même être effectuée par un automate.

## Revendications

1. Dispositif de fixation de revêtement, comportant, d'une part un profilé (1) muni d'une succession de fentes longitudinales (15) et, d'autre part, un fil d'anglésage (13) replié en au moins deux points pour former des agrafes de fixation (19,19a) destinées a coopérer avec les fentes, caractérisé en ce que chaque agrafe (19,19a) est située de manière générale dans un plan incliné par rapport à l'axe du fil d'anglésage (13) et est déformable par vrillage en vue de son insertion dans une fente (15) du profilé mais reprend élastiquement, après cette insertion, sa forme initiale et une position inclinée par rapport au fil et à la fente.

2. Dispositif de fixation de revêtement selon la revendication 1, caractérisé en ce que les agrafes de fixation (19,19a) ont sensiblement la forme d'un triangle de sommet arrondi (21) dont la base (27,29) est située dans le plan incliné tandis que le sommet (21) est situé dans un plan parallèle à l'axe du fil d'anglésage.

3. Dispositif de fixation selon l'une des revendications 1 et 2, caractérisé en ce que les fentes (15) du profilé (1) sont parallèles au fil d'anglésage.

4. Dispositif de fixation selon l'une des revendications 1 à 3, caractérisé en ce qu'après insertion, la base (27,29) de chaque agrafe de fixation (19,19a) est en appui sur la face intérieure du profilé (1) des deux côtés de la fente de réception (15).

5. Dispositif de fixation selon l'une des revendications 2 à 4, caractérisé en ce que la longueur de la base (27,29) du triangle de l'agrafe est inférieure à la longueur de la fente.

6. Dispositif de fixation selon l'une des revendications précédentes, caractérisé en ce que les agrafes (19,19a) sont situées entre des parties droites (17,17a) du fil d'anglésage.

7. Dispositif de fixation selon l'une des revendications 1 à 6, caractérisé en ce que le revêtement (9) est enroulé autour des parties droites (17,17a) du fil d'anglésage et que les agrafes de fixation (19,19a) font saillie à travers des ouvertures (31) du revêtement.

8. Elément de siège comprenant une armature creuse (1) sur laquelle est fixée une nappe (3) supportant un garnissage (5) muni d'un revêtement (9), caractérisé en ce que le revêtement (9) est fixé par un dispositif de fixation selon l'une des revendications précédentes, le profilé étant constitué par un élément d'armature du siège.

9. Elément de siège selon la revendication 8, caractérisé en ce que le garnissage (5) et le revêtement (9) entourent presque complètement l'élément d'armature (1) et que les fentes (15) sont situées sur la partie de l'élément d'armature regardant vers l'intérieur du siège.

10. Elément de siège selon la revendication 8, caractérisé en ce que le revêtement (9) se prolonge au-delà du garnissage et recouvre une partie du profilé.

## Claims

1. A device for fixing a covering,
comprising on the one hand a profile section (1) having a series of longitudinal slots (15), and on the other hand an edging wire (13) bent at at least two places to form fastener clips (19, 19a) intended to cooperate with the slots, characterised in that each clip (19, 19a) is situated generally in a plane inclined relative to the axis of the edging wire (13), and is deformable by twisting for the purpose of its insertion into a slot (15) in the profile section, but, after this insertion, resiliently recovers its initial shape and a position inclined relative to the wire and to the slot.

2. A device for fixing a covering according to claim 1, characterised in that the fastener clips (19, 19a) have substantially the shape of a triangle with a rounded apex (21), the base (27, 29) of which is situated in the inclined plane while the apex (21) is situated in a plane parallel to the axis of the edging wire.

3. A fixing device according to one of claims 1 and 2, characterised in that the slots (15) in the profile section (1) are parallel to the edging wire.

4. A fixing device according to one of claims 1 to 3, characterised in that, after insertion, the base (27, 29) of each fastener clip (19, 19a) bears on the internal face of the profile section (1) of both sides of the receiving slot (15).

5. A fixing device according to one of claims 2 to 4, characterised in that the length of the base (27, 29) of the triangle of the fastener clip is less than the length of the slot.

6. A fixing device according to one of the preceding claims, characterised in that the clips (19, 19a) are situated between straight portions (17, 17a) of the edging wire.

7. A fixing device according to one of claims 1 to 6, characterised in that the covering (9) is wrapped around the straight portions (17, 17a) of the edging wire, and that the fastener clips (19, 19a) project through openings (31) in the covering.

8. A seating element comprising a hollow frame (1) on which is fixed a sheet (3) supporting padding (5) having a covering (9), characterised in that the covering (9) is fixed by a fixing device according to one of the preceding claims, the profile section being constituted by a frame member of the seat.

9. A seating element according to claim 8, characterised in that the padding (7) and the covering (9) almost completely surround the frame member (1), and that the slots (15) are situated on the part of the frame member facing towards the interior of the seat.

10. A seating element according to claim 8, characterised in that the covering (9) extends beyond the padding and covers a part of the profile section.

## Patentansprüche

1. Vorrichtung zum Befestigen eines Überzugs, welche aufweist:
einerseits ein Profil (1), welches mit einer Folge longitutinaler Schlitze (15) versehen ist, und andererseits einen Befestigungsdraht (13), der an mindestens zwei Punkten gebogen ist, um Befestigungsklammern (19, 19a) zu bilden, um mit den Schlitzen zusammenzuwirken,
**dadurch gekennzeichnet, daß**
jede Klammer (19, 19a) sich allgemein in einer Ebene befindet, die bezüglich der Achse des Befestigungsdrahtes (13) geneigt ist, und durch Verschränkung hinsichtlich ihrer Einfügung in einen Schlitz (15) des Profils verformbar ist, aber elastisch nach dieser Einfügung ihre Anfangsform und eine geneigte Stellung bezüglich des Drahtes und des Schlitzes wieder einnimmt.

2. Vorrichtung zur Befestigung eines Überzugs nach Anspruch 1, dadurch gekennzeichnet, daß die Befestigungsklammern (19, 19a) im wesentlichen die Form eines Dreiecks mit abgerundeter Spitze (21) haben, dessen Basis (27, 29) sich in der geneigten Ebene befindet, während sich die Spitze (21) in einer Ebene parallel zur Achse des Befestigungsdrahtes befindet.

3. Befestigungsvorrichtung nach einem der Ansprüche 1 und 2, dadurch gekennzeichnet, daß die Schlitze (15) des Profils (1) parallel zu dem Befestigungsdraht sind.

4. Befestigungsvorrichtung nach einem der Ansprüche 1 bis 3, dadurch gekennzeichnet, daß nach Einfügen die Basis (27, 29) jeder Befestigungsklammer (19, 19a) gegen die Innenfläche des Profils (1) drückt, und zwar auf beiden Seiten des Aufnahmeschlitzes (15).

5. Befestigungsvorrichtung nach einem der Ansprüche 2 bis 4, dadurch gekennzeichnet, daß die Länge der Basis (27, 29) des Dreiecks der Klammer kürzer ist als die Länge des Schlitzes.

6. Befestigungsvorrichtung nach einem der vorhergehenden Ansprüche, dadurch gekennzeichnet, daß die Klammern (19, 19a) sich zwischen geraden Teilen (17, 17a) des Befestigungsdrahtes befinden.

7. Befestigungsvorrichtung nach einem der Ansprüche 1 bis 6, dadurch gekennzeichnet, daß der Überzug (9) um die geraden Teile (17, 17a) des Befestigungsdrahtes gewickelt ist und daß die Befestigungsklammern (19, 19a) durch die Öffnungen (31) des Überzugs hervorstehen.

8. Sitzelement, welches eine hohle Bewehrung (1) aufweist, auf welcher ein Mantel (3) befestigt ist, der eine Auskleidung (5) stützt, welche mit einem Überzug (9) versehen ist, dadurch gekennzeichnet, daß der Überzug (9) durch eine Befestigungsvorrichtung nach einem der vorhergehenden Ansprüche befestigt ist, wobei das Profil aus einem Element der Bewehrung des Sitzes gebildet ist.

9. Sitzelement nach Anspruch 8, dadurch gekennzeichnet, daß die Auskleidung (5) und der Überzug (9) fast vollständig das Bewehrungselement (1) umschließen und daß die Schlitze (15) sich auf dem Teil des Bewehrungselements befinden, welches zu dem Inneren des Sitzes weist.

10. Sitzelement nach Anspruch 8, dadurch gekennzeichnet, daß der Überzug (9) sich bis über die Auskleidung hinaus verlängert und einen Teil des Profils überdeckt.
